(19) Europäisches Patentamt
European Patent Office
Office européen des brevets

(11) Veröffentlichungsnummer: **0 000 888**
**A1**

(12) # EUROPÄISCHE PATENTANMELDUNG

(21) Anmeldenummer: **78100600.2**

(22) Anmeldetag: **07.08.78**

(51) Int. Cl.²: **C 07 F 9/24,** A 01 N 9/36

(30) Priorität: **19.08.77 DE 2737403**

(43) Veröffentlichungstag der Anmeldung: **07.03.79**
**Patentblatt 79/5**

(84) Benannte Vertragsstaaten: **BE CH DE FR GB NL**

(71) Anmelder: **Bayer Aktiengesellschaft, Zentralbereich Patente,Marken und Lizenzen Bayerwerk, D-5090 Leverkusen 1 (DE)**

(72) Erfinder: **Hoffmann, Hellmut, Dr., Tersteegenweg 17, D-5600 Wuppertal 1 (DE)**
Erfinder: **Hammann, Ingeborg, Dr., Belfortstrasse 9, D-5000 Köln 1 (DE)**
Erfinder: **Homeyer, Bernhard, Dr., Obere Strasse 28, D-5090 Leverkusen 3 (DE)**

(54) **N-(Aminomethylen)-(mono- bzw. dithio)-phosphorsäurediesteramide, Verfahren zu ihrer Herstellung und ihre Verwendung als Insektizide, Akarizide und Nematizide.**

(57) N-(Acetylaminomethylen)-(mono- bzw. dithio)-phosphorsäurediesteramide der Formel

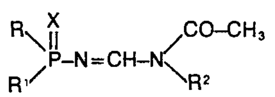

worin

R und R¹ für gleiches oder verschiedenes Alkoxy oder Alkylthio,

$R^2$ für Alkyl und

X für Sauerstoff oder Schwefel stehen.

Diese Verbindungen zeichnen sich durch starke insektizide, akarizide und nematizide Eigenschaften aus.

Sie können aus den entsprechenden N-Aminomethylen-phosphorsäure-diesteramiden durch Acylierung mit Essigsäureanhydrid hergestellt werden.

EP 0 000 888 A1

BAYER AKTIENGESELLSCHAFT
Zentralbereich
Patente, Marken und Lizenzen

5090 Leverkusen, Bayerwerk
Rt/AB

Typ Ia

**N-(Aminomethylen)-(mono- bzw. dithio)-phosphorsäurediesteramide, Verfahren zu ihrer Herstellung und ihre Verwendung als Insektizide, Akarizide und Nematizide**

Die vorliegende Erfindung betrifft neue N-(Aminomethylen)-(mono-bzw. dithio)-phosphorsäurediesteramide, ein Verfahren zu ihrer Herstellung und ihre Verwendung als Insektizide, Akarizide und Nematizide.

Es ist bereits bekannt, daß O,S-Dialkylthiolphosphorsäurediesteramide, z.B. O,S-Dimethyl-N-(methyl- bzw. -tert.-butylaminomethylen)-thiolphosphorsäurediesteramid, insektizide und akarizide Eigenschaften aufweisen (vergleiche Deutsche Offenlegungsschrift 2 211 338).

Es wurden nun die neuen N-(Aminomethylen)-(mono- bzw. dithio)-phosphorsäurediesteramide der Formel I

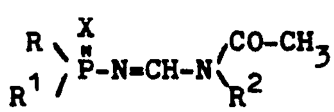

(I)

worin

R und $R^1$ für gleiches oder verschiedenes Alkoxy oder Alkylthio,

$R^2$ für Alkyl und

X für Sauerstoff oder Schwefel stehen,

gefunden.

Diese neuen Verbindungen zeichnen sich durch starke insektizide, akarizide und nematizide Eigenschaften aus.

Weiterhin wurde gefunden, daß die N-(Aminomethylen)-(mono- bzw. dithio)-phosphorsäurediesteramide (I) erhalten werden, wenn man N-(Monoalkylaminomethylen)-(mono- bzw. dithio)-phosphorsäurediesteramide der Formel

$$\begin{matrix} R \\ R^1 \end{matrix}\!\!>\overset{X}{\overset{\|}{P}}-N=CH-NHR^2 \qquad (II)$$

in welcher

R, $R^1$, $R^2$ und X die oben angegebene Bedeutung haben, mit Essigsäureanhydrid gegebenenfalls in Gegenwart eines organischen Lösungsmittels umsetzt.

Überraschenderweise besitzen die erfindungsgemäßen N-(Aminomethylen)-(mono- bzw. dithio)-phosphorsäurediesteramide eine bessere insektizide, akarizide und nematizide Wirkung als die aus der Literatur vorbekannten Verbindungen analoger Konstitution und gleicher Wirkungsrichtung. Die Stoffe gemäß vorliegender Erfindung stellen somit eine echte Bereicherung der Technik dar.

Verwendet man beispielsweise O,S-Dimethyl-N-(tert.-butylaminomethylen)-thiophosphorsäurediesteramid und Essigsäureanhydrid, so kann der Reaktionsverlauf durch das folgende Formelschema wiedergegeben werden:

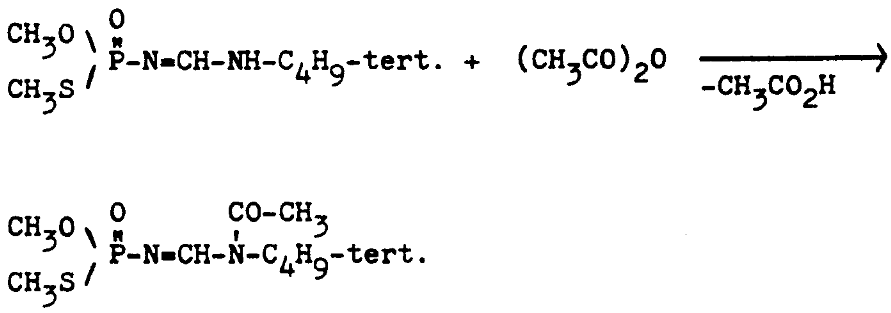


Die zu verwendenden Ausgangsstoffe sind durch die Formel (II) allgemein definiert. Vorzugsweise steht darin jedoch

R und $R^1$ unabhängig voneinander für geradkettiges oder verzweigtes Alkoxy mit 1 bis 6, vorzugsweise 1 bis 3, Kohlenstoffatomen oder für geradkettiges oder verzweigtes Alkylthio mit 1 bis 6, vorzugsweise 1 bis 4, Kohlenstoffatomen,

$R^2$ für geradkettiges oder verzweigtes Alkyl mit 1 bis 6, vorzugsweise 1 bis 4, Kohlenstoffatomen und

X für Sauerstoff oder Schwefel.

Die als Ausgangsstoffe zu verwendenden N-(Aminomethylen)-(mono- bzw. dithio)-phosphorsäurediesteramide sind teilweise bekannt (vergleiche Deutsche Offenlegungsschrift 2 211 338) oder können nach literaturbekannten Verfahren aus den entsprechenden bekannten N-(Alkoxymethylen)-(mono- bzw. dithio)-phosphorsäurediesteramiden (vergleiche Deutsche Offenlegungsschrift 2 517 101)

mit Monoalkylaminen hergestellt werden. Als Beispiele dafür seien im einzelnen genannt:
O,S-Dimethyl-, O,S-Diäthyl-, O,S-Di-n-propyl-, O,S-Di-iso-propyl-, O-Methyl-S-äthyl-, O-Methyl-S-n-propyl-, O-Methyl-S-iso-propyl-, O-Methyl-S-n-butyl-, O-Methyl-S-iso-butyl-, O-Methyl-S-sek.-butyl-, O-Methyl-S-tert.-butyl-, O-Äthyl-S-n-propyl-, O-Äthyl-S-iso-propyl-, O-Äthyl-S-n-butyl-, O-Äthyl-S-iso-butyl-, O-Äthyl-S-sek.-butyl-, O-Äthyl-S-tert.-butyl-, O-n-Propyl-S-äthyl-, O-n-Propyl-S-iso-propyl-, O-n-Propyl-S-n-butyl-, O-n-Propyl-S-iso-butyl-, O-n-Propyl-S-sek.-butyl-, O-n-Propyl-S-tert.-butyl-, O-iso-Propyl-S-äthyl-, O-iso-Propyl-S-n-propyl-, O-iso-Propyl-S-n-butyl-, O-iso-Propyl-S-sek.-butyl-, O-iso-Propyl-S-iso-butyl und O-iso-Propyl-S-tert.-butyl-N-(methylaminomethylen)- bzw. -N-(äthylaminomethylen)-, -N-(n-propylaminomethylen)-, -N-(iso-propylaminomethylen)- und -N-(n-butylaminomethylen)-thiolphosphorsäurediesteramid und die entsprechenden Thionoanalogen, ferner
O,O-Dimethyl-, O,O-Diäthyl-, O,O-Di-n-propyl- und O,O-Di-iso-propyl-N-(methylaminomethylen)- bzw. -N-(äthylaminomethylen)-, -N-(n-propylaminomethylen)-, -N-(iso-propylaminomethylen)- und -N-(n-butylaminomethylen)-phosphorsäurediesteramid und die entsprechenden Thionoanalogen, außerdem
S,S-Dimethyl-, S,S-Diäthyl-, S,S-Di-n-propyl- und S,S-Di-iso-propyl-N-(methylaminomethylen)- bzw. -N-(äthylaminomethylen)-, -N-(n-propylaminomethylen)-, -N-(iso-propylaminomethylen)- und -N-(n-butylaminomethylen)-phosphorsäurediesteramid.

Das weiterhin als Ausgangsstoff zu verwendende Essigsäureanhydrid ist bekannt und auch großtechnisch leicht herstellbar.

Das Verfahren zur Herstellung der erfindungsgemäßen Verbindungen wird bevorzugt in Essigsäureanhydrid durchgeführt, wobei dieses als Reaktionskomponente und gleichzeitig als Lösungsmittel fungiert.

Die Reaktionstemperatur kann innerhalb eines größeren Bereichs variiert werden. Im allgemeinen arbeitet man zwischen 4o und 1oo°C, vorzugsweise bei 55 bis 75°C.

Die Umsetzung läßt man im allgemeinen bei Normaldruck ablaufen.

Zur Durchführung des Verfahrens setzt man das Essigsäureanhydrid im Überschuß ein und erhitzt das Gemisch aus dem Phosphorsäureesteramid und Essigsäureanhydrid mehrere Stunden. Danach wird das Reaktionsgemisch in einem organischen Lösungsmittel, wie z.B. Toluol, gelöst. Die organische Phase wird zur Entfernung der entstehenden Essigsäure mit Wasser und anschließend mit einer Bicarbonatlösung gewaschen. Das Lösungsmittel wird im Vakuum abgezogen.

Die neuen Verbindungen fallen in Form von Ölen an, die sich zum Teil nicht unzersetzt destillieren lassen, jedoch durch sogenanntes "Andestillieren", d.h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z. B. Oniscus asellus, Armadillidium vulgare, Porcellio scaber.

Aus der Ordnung der Diplopoda z. B. Blaniulus guttulatus.
Aus der Ordnung der Chilopoda z. B. Geophilus carpophagus, Scutigera spec.
Aus der Ordnung der Symphyla z. B. Scutigerella immaculata.
Aus der Ordnung der Thysanura z. B. Lepisma saccharina.
Aus der Ordnung der Collembola z. B. Onychiurus armatus.
Aus der Ordnung der Orthoptera z. B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z. B. Forficula auricularia.
Aus der Ordnung der Isoptera z. B. Reticulitermes spp..
Aus der Ordnung der Anoplura z. B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp..
Aus der Ordnung der Lepidoptera z. B. Pectinophora gossypiella, Bupalus piniarius, Cheimatobia brumata, Lithocolletis blancardella, Hyponomeuta padella, Plutella maculipennis,

Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z. B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z. B. Diprion spp., Hoplocampa spp., Lasius spp., Monomorium pharaonis, Vespa spp.

Aus der Ordnung der Diptera z.B. Aëdes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp.,

Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die Wirkstoffe können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä. sowie ULV-Kalt- und Warmnebel-Formulierungen.
Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehle, Kokosnußschalen, Maiskolben und Tabakstengel; als Emulgier- und/oder schaumerzeugende Mittel: nichtionogene und anionische Emulgatoren, wie Polyoxyäthylen-Fettsäure-Ester, Polyoxyäthylen-Fettalkohol-Äther, z.B. Alkylaryl-polyglykol-äther, Alkylsulfonate, Alkylsulfate, Arylsulfonate sowie Eiweißhydrolysate; als Dispergiermittel: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Anwendung der erfindungsgemäßen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,01 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die Wirkstoffe eignen sich auch zur Bekämpfung von Schädlingen auf dem veterinärmedizinischen Sektor.

Beispiel A

Phaedon-Larven-Test

Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Mit der Wirkstoffzubereitung besprüht man Kohlblätter (Brassica oleracea) tropfnaß und besetzt sie mit Meerrettichblattkäfer-Larven (Phaedon cochleariae).

Nach den angegebenen Zeiten wird die Abtötung in % bestimmt. Dabei bedeutet 100 %, daß alle Käfer-Larven abgetötet wurden; 0 % bedeutet, daß keine Käfer-Larven abgetötet wurden.

Wirkstoffe, Wirkstoffkonzentrationen, Zeiten der Auswertung und Resultate gehen aus der nachfolgenden Tabelle hervor:

**Tabelle**

(pflanzenschädigende Insekten)

Phaedon-Larven-Test

| Wirkstoffe | Wirkstoffkonzentration in % | Abtötungsgrad in % nach 3 Tagen |
|---|---|---|
| 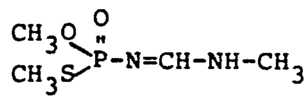 | 0,1 | 100 |
| | 0,01 | 0 |
| (bekannt) | | |
| 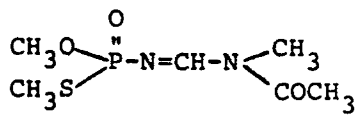 | 0,1 | 100 |
| | 0,01 | 100 |
| 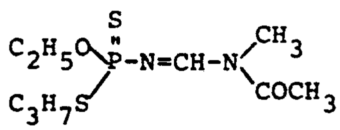 | 0,1 | 100 |
| | 0,01 | 100 |
| 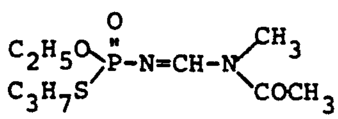 | 0,1 | 100 |
| | 0,01 | 100 |
| 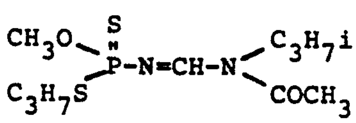 | 0,1 | 100 |
| | 0,01 | 100 |
| 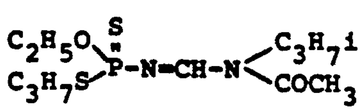 | 0,1 | 100 |
| | 0,01 | 100 |
| 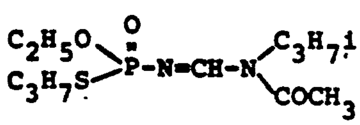 | 0,1 | 100 |
| | 0,01 | 100 |

0000888

Beispiel B

Tetranychus-Test (resistent)

| | | |
|---|---|---|
| Lösungsmittel: | 3 Gewichtsteile | Aceton |
| Emulgator: | 1 Gewichtsteil | Alkylarylpolyglykoläther |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Mit der Wirkstoffzubereitung werden Bohnenpflanzen (Phaseolus vulgaris), die stark von allen Entwicklungsstadien der gemeinen Spinnmilbe oder Bohnenspinnmilbe (Tetranychus urticae) befallen sind, tropfnaß besprüht.

Nach den angegebenen Zeiten wird die Abtötung in % bestimmt. Dabei bedeutet 100 %, daß alle Spinnmilben abgetötet wurden; 0 % bedeutet, daß keine Spinnmilben abgetötet wurden.

Wirkstoffe, Wirkstoffkonzentrationen, Auswertungszeiten und Resultate gehen aus der nachfolgenden Tabelle hervor:

## T a b e l l e

(pflanzenschädigende Milben)
Tetranychus-Test (resistent)

| Wirkstoffe | Wirkstoffkonzentration in % | Abtötungsgrad in % nach 2 Tagen |
|---|---|---|
| 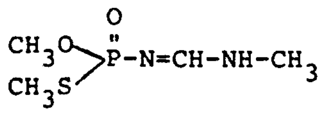 | 0,1 | 98 |
| | 0,01 | 0 |
| (bekannt) | | |
| 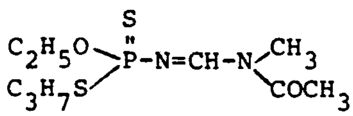 | 0,1 | 100 |
| | 0,01 | 98 |
| 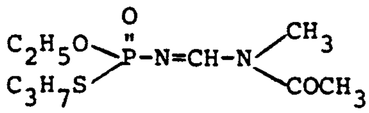 | 0,1 | 100 |
| | 0,01 | 100 |
| 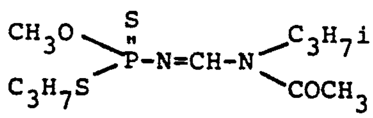 | 0,1 | 100 |
| | 0,01 | 98 |
| 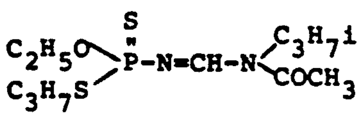 | 0,1 | 100 |
| | 0,01 | 98 |
| 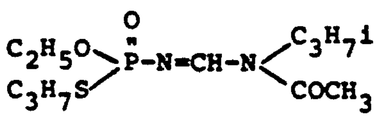 | 0,1 | 100 |
| | 0,01 | 99 |

Beispiel C

Grenzkonzentrations-Test / Wurzelsystemische Wirkung

Testinsekt: Phaedon cochleariae-Larven
Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/1) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

Wirkstoffe, Aufwandmengen und Resultate gehen aus der nachfolgenden Tabelle hervor:

**<u>T a b e l l e</u>**

(Wurzelsystemische Wirkung)
Phaedon cochleariae-Larven

| Wirkstoffe | Abtötungsgrad in % bei einer Wirkstoffkonzentration in 1,25 ppm |
|---|---|
| 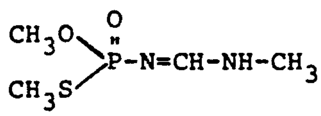<br>(bekannt) | 0 |
| 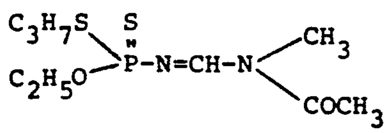 | 100 |

Beispiel D

Grenzkonzentrations-Test

Testnematode: Meloidogyne incognita
Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27°C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Wirkstoffe, Aufwandmengen und Resultate gehen aus der nachfolgenden Tabelle hervor:

**Tabelle**

(Nematizide)
Meloidogyne incognita

| Wirkstoffe | Abtötungsgrad in % bei einer Wirkstoffkonzentration in 1,25 ppm |
|---|---|
| 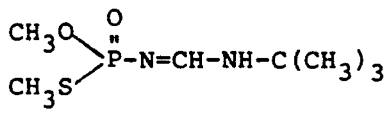 (bekannt) | 0 |
| 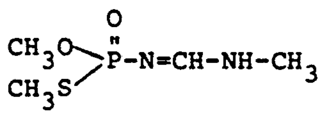 (bekannt) | 0 |
| 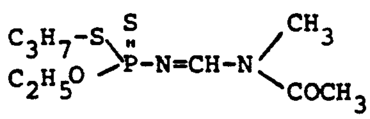 | 100 |

## Herstellungsbeispiele

**Beispiel 1:** 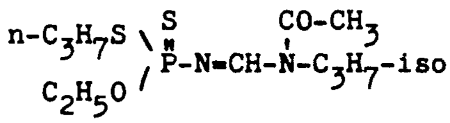

Eine Mischung aus 27 g (o,1 Mol) O-Äthyl-S-n-propyl-N-(iso-propylaminomethylen)-dithiophosphorsäurediesteramid und 12 g Essigsäureanhydrid wird unter Rühren 6 Stunden auf 7o°C erhitzt. Das Reaktionsgemisch wird in 3oo ml Toluol gelöst, 2 mal mit Wasser und 1 mal mit einer Bicarbonat-Lösung gewaschen. Das Lösungsmittel wird im Vakuum abgezogen und der Rückstand an der Quecksilberpumpe andestilliert. Man erhält 24 g (77 % der Theorie) an O-Äthyl-S-n-propyl-N-(N'-acetyl-N'-iso-propylaminomethylen)-dithiophosphorsäurediesteramid mit dem Brechungsindex $n_D^{22}$: 1,5372.

Analog Beispiel 1 können die Verbindungen der Formel

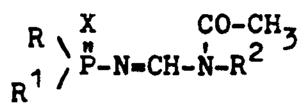 (I)

hergestellt werden:

| Beispiel Nr. | R | $R^1$ | $R^2$ | X | Brechungsindex: |
|---|---|---|---|---|---|
| 2 | $CH_3S$ | $CH_3O$ | $CH_3$ | O | $n_D^{22}$:1,5189 |
| 3 | n-$C_3H_7S$ | $C_2H_5O$ | $CH_3$ | S | $n_D^{21.5}$:1,5551 |

| Beispiel Nr. | R | $R^1$ | $R^2$ | X | Brechungsindex: |
|---|---|---|---|---|---|
| 4 | $C_2H_5O$ | $C_2H_5O$ | $C_3H_7$-iso | O | $n_D^{22}$:1,4632 |
| 5 | $C_2H_5O$ | $C_2H_5O$ | $CH_3$ | O | $n_D^{22}$:1,462o |
| 6 | $C_2H_5O$ | $C_2H_5O$ | $CH_3$ | S | $n_D^{26}$:1,5118 |
| 7 | $C_2H_5O$ | $C_2H_5O$ | $C_3H_7$-iso | S | $n_D^{22}$:1,5o39 |
| 8 | n-$C_3H_7S$ | $C_2H_5O$ | $C_3H_7$-iso | O | $n_D^{21}$:1,4969 |
| 9 | n-$C_3H_7S$ | $C_2H_5O$ | $CH_3$ | O | $n_D^{26}$:1,49o2 |
| 1o | n-$C_3H_7S$ | n-$C_3H_7S$ | $CH_3$ | O | $n_D^{22}$:1,52o9 |
| 11 | n-$C_3H_7S$ | n-$C_3H_7S$ | $C_3H_7$-iso | O | $n_D^{22}$:1,51o4 |
| 12 | n-$C_3H_7S$ | $CH_3O$ | $C_3H_7$-iso | S | $n_D^{22}$:1,5463 |

Die als Ausgangsstoffe zu verwendenden N-(Monoalkylaminomethylen)-(mono- bzw. dithio)-phosphorsäurediesteramide (II) können wie im folgenden beschrieben hergestellt werden:

n-$C_3H_7S$ \ S
$\quad\quad\quad\quad\quad\quad$ ‖
$\quad\quad\quad\quad\quad\quad$ P-N=CH-NH-$C_3H_7$-iso
$C_2H_5O$ /

In die gut gerührte und gekühlte Mischung von 7oo ml Acetonitril und loo g 7o%ige wässrige Isopropylamin-Lösung tropft man bei -5 bis 0°C innerhalb von 1 Stunde 256 g (1 Mol) O-Äthyl-

S-n-propyl-N-(äthoxymethylen)-dithiophosphorsäurediesteramid, rührt 2 Stunden nach und verdünnt die Reaktionsmischung mit einem Liter Toluol. Die organische Phase wird über Natriumsulfat getrocknet, dann zieht man das Lösungsmittel im Vakuum ab und destilliert den Rückstand an der Quecksilberpumpe an. Man erhält 24o g (89 % der Theorie) O-Äthyl-S-n-propyl-N-(isopropylaminomethylen)-dithiophosphorsäurediesteramid mit dem Brechungsindex $n_D^{23}$: 1,5426.

Patentansprüche

1. N-(Aminomethylen)-(mono- bzw. dithio)-phosphorsäurediesteramide der Formel I

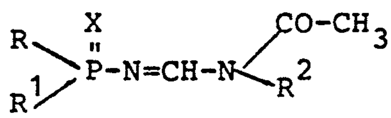

(I)

worin

R und $R^1$ für gleiches oder verschiedenes Alkoxy oder Alkylthio,

$R^2$ für Alkyl und

X für Sauerstoff oder Schwefel stehen.

2. Verfahren zur Herstellung der N-(Aminomethylen)-(mono- bzw. dithio)-phosphorsäurediesteramide (I) gemäß Anspruch 1, dadurch gekennzeichnet, daß N-(Monoalkylaminomethylen)-(mono- bzw. dithio)-phosphorsäurediesteramide der Formel

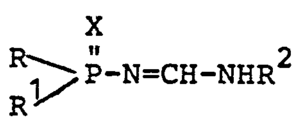

(II)

in welcher

R, $R^1$, $R^2$ und X die oben angegebene Bedeutung haben, mit Essigsäureanhydrid gegebenenfalls in Gegenwart eines organischen Lösungsmittels umsetzt.

3. Insektizide, akarizide oder nematizide Mittel gekennzeichnet durch einen Gehalt an mindestens einem N-(Aminomethylen)-(mono- bzw. dithio)-phosphorsäurediesteramid gemäß Anspruch 1.

4. Verwendung von N-(Aminomethylen)-(mono- bzw. dithio)-phosphorsäurediesteramiden gemäß Anspruch 1 zur Bekämpfung von Insekten, Acarinae und Nematoden.

5. Verwendung zur Bekämpfung von Insekten, Acarinae oder Nematoden, dadurch gekennzeichnet, daß man N-(Aminomethylen)-(mono- bzw. dithio)-phosphorsäurediesteramide gemäß Anspruch 1 auf Insekten, Acarinae oder Nematoden und/oder ihren Lebensraum einwirken läßt.

6. Verfahren zur Herstellung insektizider, acarizider oder nematizider Mittel, dadurch gekennzeichnet, daß man N-(Aminomethylen)-(mono- bzw. dithio)-phosphorsäurediesteramide gemäß Anspruch 1 mit Streckmitteln und/oder oberflächenaktiven Stoffen vermischt.

Europäisches Patentamt

# EUROPÄISCHER RECHERCHENBERICHT

Nummer der Anmeldung

0000888

EP 78 10 0600

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 312 738 (CIBA-GEIGY) * Anspruch 24 * -- | 3-6 |
| | DE - A - 2 216 552 (BAYER) * Anspruch 3 * -- | 3-6 |
| A | CH - A - 540 646 (STAUFFER CHEM.) -- | |
| A | DD - A - 106 256 (CIBA-GEIGY) -- | |
| A | DE - A - 2 420 069 (BAYER) -- | |
| D | DE - A - 2 211 338 (BAYER) ---- | |

KLASSIFIKATION DER ANMELDUNG (Int.Cl.²)

C 07 F 9/24
A 01 N 9/36

RECHERCHIERTE SACHGEBIETE (Int. Cl.²)

A 01 N 9/36
C 07 F 9/22
C 07 F 9/24

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 21-11-1978 | KAPTEYN |

EPA form 1503.1 06.78